# EUROPÄISCHE PATENTSCHRIFT

(11) **EP 0 690 956 B1**
(45) Veröffentlichungstag und Bekanntmachung des Hinweises auf die Patenterteilung: **15.09.1999**
(21) Anmeldenummer: 95907572.2
(22) Anmeldetag: 20.01.1995
(51) Int. Cl.: F02F 7/00, F02F 11/00, F16J 15/02, B22D 19/04

(54) **VERFAHREN ZUR HERSTELLUNG EINES DECKELS AUS LEICHTMETALLGUSS SOWIE DECKEL AUS LEICHTMETALLGUSS**
PROCESS FOR CASTING A LIGHT METAL COVER AND CAST LIGHT METAL COVER
PROCEDE DE FABRICATION D'UN COUVERCLE COULE EN METAL LEGER ET COUVERCLE AINSI OBTENU

(30) Priorität: 25.01.1994 DE 4402120
(43) Veröffentlichungstag der Anmeldung: 10.01.1996
(73) Patentinhaber: Alusuisse Bayrisches Druckguss-Werk GmbH & Co. KG, 85570 Markt Schwaben (DE)
(72) Erfinder: VODERMEIER, Johann, D-85521 Ottobrunn (DE); HÖGLINGER, Gerhard, D-83026 Rosenheim (DE)
(74) Vertreter: Strasse, Joachim, Dipl.-Ing.
(86) Internationale Anmeldenummer: EP9500206
(87) Internationale Veröffentlichungsnummer: WO9520102

(56) Entgegenhaltungen:
- DE-A- 4 202 860
- DE-C- 3 305 765
- DE-C- 3 639 218

## Beschreibung

Die Erfindung betrifft ein Verfahren zur Herstellung eines Deckels aus Leichtmetallguß, insbesondere für ein Maschinengehäuse, wobei das Leichtmetall in eine aus zumindest zwei, die Gestalt des Deckels umschließenden Formteilen bestehende Gußform eingeleitet und wobei der Deckel nach dem Erstarren des Leichtmetalls aus der Gußform entnommen wird.

Weiterhin betrifft die Erfindung einen Deckel aus Leichtmetallguß, insbesondere für ein Maschinengehäuse, wobei der Deckel auf zumindest einer Seite mit zumindest einer Auflagefläche für eine eine Dichtfläche aufweisende Dichtung versehen ist.

Derartige Deckel finden im Bereich des Maschinenbaus häufig Verwendung, so insbesondere als Ventildeckeldichtung oder als Ölwanne einer Brennkraftmaschine oder auch als Abdeckung für umlaufende Steuerteile einer Brennkraftmaschine, wie beispielsweise eines Zahnriemengetriebes. Aber auch in anderen Bereichen, beispielsweise im Getriebebau, sind derartige Deckel vielfältig bekannt.

Ein Problem bei der Verwendung derartiger Deckel ist die Abdichtung entlang einer häufig kompliziert verlaufenden Dichtfläche. In bekannter Weise ist ein derartiger Deckel mit einer ebenen Auflagefläche für eine Dichtung versehen, wobei die Auflagefläche bei Deckeln aus Leichtmetallguß im allgemeinen plan gefräst werden muß, um die gewünschte Dichtungswirkung zu ergeben. Als Dichtung dient im Stand der Technik üblicherweise eine beispielsweise aus Kork ausgeschnittene oder ausgestanzte Dichtung, die dem Konturenverlauf der Dichtfläche angepaßt ist. Zur Montage wird die Dichtung dann auf die Dichtfläche des Deckels aufgelegt oder gegebenenfalls mit einem Dichtungskleber aufgeklebt, und der mit der Dichtung versehene Deckel wird mit dem Gehäuse verbunden, wobei das Gehäuse eine der Kontur der Dichtung angepaßte, gehäuseseitige Dichtfläche aufweist. Durch Verspannen des Deckels gegenüber dem Gehäuse wird die Dichtung zusammengedrückt, wodurch die gewünschte Dichtkraft erzeugt wird. Nach einer Demontage eines Deckels ist die Dichtung im Stand der Technik plastisch verformt und muß durch eine neue Dichtung ersetzt werden.

Aufwendig ist dabei nicht nur die Fertigung des Deckels, auf dem nach dem Gießen noch die Dichtfläche durch Oberflächenbehandlung erzeugt werden muß, sondern auch die aufwendige Montage mit genauer Ausrichtung der Dichtung auf dem Deckel, wozu zum Teil an Deckel und Dichtung noch Paßvorrichtungen, wie Anlagekanten oder Paßstifte, vorgesehen sein müssen. Soll die Dichtfläche nicht nur in einer Ebene verlaufen, sondern ist es erforderlich, daß der Dichtungsverlauf dreidimensional ist, so müssen häufig zusätzliche Dichtungen vorgesehen sein, die für eine Verbindung unterschiedlicher Dichtungsebenen sorgen. Hier kommt es häufig an den Übergangsstellen der unterschiedlichen Dichtungen zu Abdichtproblemen.

Aus der DE-C2-36 39 218 oder aus der US-PS 4 819 953 sind Deckel bekannt, die das beschriebene Problem dadurch lösen, daß im dichtend aufliegenden Rand des Deckels unter Zwischenschaltung eines Haftvermittlers eine ringsherum verlaufende Dichtung in thermisch erweichtem Zustand angespritzt ist. Diese Dichtwulst verbleibt normalerweise bei Reparatur- oder Revisionsarbeiten im Deckelrand und kann mehrfach verwendet werden. Die aufgespritzte Dichtwulst hat jedoch einen unregelmäßigen Querschnitt, und die Haftsicherheit in der hierfür vorgesehenen Dichtungsnut im Deckel ist nicht sehr groß.

Aus der DE-A-42 02 860 ist bekannt, zur Herstellung eines Deckels mit angeformter Dichtung den Deckel als einen Formteil zu benutzen. Die hierbei erzeugte Dichtung ist aber eine umlaufende Ringdichtung in einer Ebene. Außerdem erfolgt die Verbindung der Dichtung mit dem Deckel durch plastische Verformung der Nutränder und durch ein Vulkanisierverfahren.

Es ist demgegenüber Aufgabe der vorliegenden Erfindung, ein im Oberbegriff des Anspruchs 1 genanntes Verfahren weiter zu entwickeln, mit dem ein Deckel einfacher und kostengünstiger herstellbar wird, und dessen eingearbeitete Dichtung einen beliebigen Verlauf nehmen kann und die unverlierbar mit dem Deckel verbunden ist. Weiterhin ist es die Aufgabe der vorliegenden Erfindung, einen Deckel mit angeformter Dichtung verfügbar zu machen, der auch für komplizierte Bauformen geeignet ist.

Die erfindungsgemäße Lösung ist in den Ansprüchen 1 bzw. 6 angegeben.

Der zunächst konventionell, beispielsweise im Druckgießverfahren hergestellte Deckel wird mit seiner Auflagefläche, wie diese auch gestaltet sei, selbst zu einem Werkzeugformteil gemacht. In Verbindung mit einem ergänzenden Werkzeug wird in einem zwischen den Werkzeugen gebildeten Hohlraum eine Dichtung unverlierbar mit dem Deckel hergestellt.

Es wird ein gattungsgemäßer Deckel erzeugt, der mit zumindest einer ringförmig in sich geschlossenen Nut versehen ist, welche die Auflagefläche für die Dichtung umfaßt, wobei die über die beliebig verlaufende Kontur des Deckeln in diesem Bereich hervorstehende Dichtung in die Nut eingefügt ist, und bei dem die Dichtung die Nut vollständig ausfüllt und mit ihr verhaftet ist.

Durch das Verwenden des, der Gußform entnommenen Deckels als ein Formteil für eine Dichtungsform, welches mit zumindest einem weiteren Formteil die Dichtungsform bildet, wird der Deckel bereits unmittelbar nach seiner Herstellung einer Zweitverwendung zugeführt, welche letztendlich dazu führt, daß nach dem Prozeß der Dichtungsherstellung in der vom Deckel mitgebildeten Dichtungsform am Deckel eine Dichtung entsteht, die mit dem Deckel fest verbunden ist. Durch diesen nur zweistufigen Fertigungsprozeß wird ein bereits mit einer Dichtung versehener erfindungsgemäßer Deckel erzeugt, welcher bereits unmittelbar zur Montage geeignet ist. Die Lagerhaltung einer gesonderten Dichtung und die Montage dieser gesonderten Dichtung am Deckel oder am Maschinengehäuse kann damit entfallen.

Vorteilhaft ist eine Ausgestaltung, bei der der Deckel, bevor er mit dem weiteren Formteil zur Dichtungsform zusammengefügt wird, auf zumindest einer vom weiteren Formteil abgewandten Seite im Bereich der Dichtungsform mit zumindest einer Auflagefläche für ein Preßwerkzeug versehen wird, und wobei der Deckel und das weitere Formteil während des Erzeugens der Dichtung unter Druck zusammengepreßt werden. Dadurch kann der Deckel unmittelbar im Bereich des Hohlraums für die Dichtung mit einer Kraft beaufschlagt werden, welche der Formkraft des in die Dichtungsform eingeleiteten Dichtungsmaterials entgegenwirkt. Dadurch wird einer Verformung des Deckels im Bereich des Hohlraums für die Dichtung entgegengewirkt, so daß eine besonders präzise Fertigung der Dichtung möglich ist.

Die Einleitung von Material zur Herstellung der Dichtung in die Dichtungsform kann durch die Wandung des weiteren Formteils durchdringende Einleitöffnungen erfolgen. Die Einleitung von Material zur Herstellung der Dichtung in die Dichtungsform kann aber auch durch zumindest eine, die Wandung des Deckels durchdringende, in die Nut mündende und hinterschnitten ausgebildete Durchgangsöffnung erfolgen. Dieses hat den Vorteil, daß nach dem Erhärten des Dichtungsmaterials der im Bereich der hinterschnitten ausgebildeten Durchgangsöffnung verbleibende Dichtungsteil eine zusätzliche mechanische Verankerung der Dichtung im Deckel bewirkt.

Vorteilhafterweise wird das Material zur Herstellung der Dichtung aus zumindest zwei Komponenten gebildet, wobei die Komponenten des Materials zur Herstellung der Dichtung bevorzugt erst beim oder unmittelbar vor dem Einleiten in die Dichtungsform zusammengeführt werden. Wird vor dem Einleiten des Materials zur Herstellung der Dichtung ein Material zur Haftungsverbesserung auf die deckelseitige Oberfläche der Dichtungsform aufgebracht, so können zusätzliche Adhäsionskräfte zwischen der Dichtung und dem Deckel erzeugt werden, die für einen festeren Halt der Dichtung am Deckel sorgen. Die Dichtung kann aber auch durch Spritzgießen in die aus Deckel und weiterem Werkzeugteil gebildete Form thermoplastisch erfolgen. Der Deckel besteht bevorzugt aus Aluminium oder einer Aluminium enthaltenden Legierung. Bevorzugterweise erfolgt zumindest die Herstellung des Deckels durch Vakuumguß; aber auch die Herstellung der Dichtung kann durch Vakuumguß erfolgen.

Um die gewünschte mechanische Verankerung der Dichtung in der Nut des Deckels zu erzeugen, ist in der Wandung des Deckels zumindest eine in die Nut mündende Durchgangsöffnung vorgesehen. Sind mehrere, voneinander beabstandete Durchgangsöffnungen vorgesehen, so sorgt dies für eine gleichmäßige Verankerung der Dichtung über den Verlauf der Nut. Der Querschnitt der Durchgangsöffnung im Bereich der Mündung in die Nut ist bevorzugterweise kleiner, als in deren von der Nut abgewandtem Bereich, so daß die Durchgangsöffnung hinterschnitten ist, wodurch die Kontur der Dichtung in ihrem in die Durchgangsöffnung eingreifendem Bereich im wesentlichen der Kontur der Durchgangsöffnung entspricht.

Die Dichtung ist in ihrem außerhalb des Deckels gelegenen Bereich bevorzugt keilförmig ausgebildet, wobei sich ihr Querschnitt vom Deckel weg zum freien Ende hin verjüngt. Dieses gestattet nicht nur ein leichteres Entfernen des weiteren Formteils von der Dichtung, sondern auch eine verbesserte Abdichtung, da sich der verjüngte Bereich der Dichtung an deren freiem Ende besser an eine am Maschinengehäuse vorgesehene Dichtfläche anschmiegen kann. Dieser Effekt wird zudem dadurch verbessert, daß die Dichtung an ihrem freien Ende mit einer abgerundeten Kante versehen ist, welche die Dichtfläche bildet.

Ist die Breite des Querschnitts der Dichtung im Bereich unmittelbar außerhalb der Nut größer als im Mündungsbereich der Nut, so daß die Dichtung auf dem die Nut umgebenden Oberflächenbereich des Deckels aufliegt, so werden auf die Dichtung einwirkende Scherkräfte vermehrt über den Dichtungsbereich unmittelbar außerhalb der Nut am Deckel abgestützt, und die Belastung der in der Nut aneinanderhaftenden Flächen zwischen Dichtung und Deckel wird auf diese Weise verringert.

Zur besonders wirksamen Kraftübertragung zwischen dem auf den Deckel wirkenden Anpreßwerkzeug beim Durchführen des Verfahrensschrittes der Dichtungsherstellung ist der Deckel an seiner von der Mündung der Nut abgewandten Seite mit einer im wesentlichen planen Auflagefläche für ein Anpreßwerkzeug versehen, welche dem ringförmigen Verlauf der Nut folgt.

Normalerweise ist die Dichtung fest mit dem Deckel verbunden und kann auch nach Reparaturen am Maschinenteil unter dem Deckel weiterverwendet werden. Dennoch kann es vorkommen, daß die Dichtung aus irgendeinem Grund unbrauchbar und eine Ersatzdichtung erforderlich wird. Diese Ersatzdichtung ist erfindungsgemäß in einfacher Weise verfügbar und kann leicht eingesetzt werden. Die Herstellung erfolgt ähnlich wie eingangs beschrieben. Allerdings wird anstelle eines Deckels eine ähnliche Formhälfte benutzt. Außerhalb des Deckels weist die Ersatzdichtung denselben Querschnitt wie die Originaldichtung auf. Die Querschnittsgeometrie des innerhalb des Deckels eindrückbaren Teils der Ersatzdichtung ist dem Original ähnlich, aber schmaler und weniger tiefgehend. Durch den schmaleren Querschnitt läßt sich die Ersatzdichtung auch in Hinterschneidungen pressen. Auf dem Boden der Nut im Deckel wird bei der Reparatur eine Schicht eines geeigneten Einkomponentenklebers aufgebracht, und auf diese Klebeschicht wird die Unterseite der weniger tiefgehenden Ersatzdichtung aufgedrückt. Eventuell vorhandene durchgehende Öffnungen werden durch Ersatzstopfen geschlossen.

Weitere Einzelheiten, Merkmale und vorteilhafte Ausbildungen des Verfahrens sowie Ausgestaltungen des Deckels gemäß der vorliegenden Erfindung und insbesondere bevorzugte Anwendungsbereiche des erfindungsgemäßen Deckels sind in den verbleibenden Ansprüchen angegeben.

Die Erfindung wird nachfolgend anhand eines Beispiels unter Bezugnahme auf die Zeichnung näher erläutert; in dieser zeigen:
- Fig. 1: eine allgemeine Ansicht einer mit einem erfindungsgemäßen Deckel versehenen Brennkraftmaschine,
- Fig. 2: eine Unteransicht eines erfindungsgemäßen Deckels von der mit der Dichtung versehenen Deckelseite,
- Fig. 3: eine Stirnansicht eines erfindungsgemäßen Deckels in Richtung des Pfeiles III der Fig. 2,
- Fig. 4: einen Schnitt durch einen erfindungsgemäßen Deckel entlang der Linie IV-IV der Fig. 2,
- Fig. 5: eine geschnittene Teilansicht einer Anordnung des Deckels mit einem weiteren Formteil und einem Preßwerkzeug im geöffneten Zustand der Dichtungsform,
- Fig. 6: die Dichtungsform gemäß Fig. 5 im geschlossenen Zustand mit schematischer Darstellung des Einspritzvorgangs des Dichtungsmaterials und
- Fig. 7: einen teilweise geschnitten dargestellten Ausschnitt aus einem mit der Dichtung gemäß der Erfindung versehenen Deckelteil.

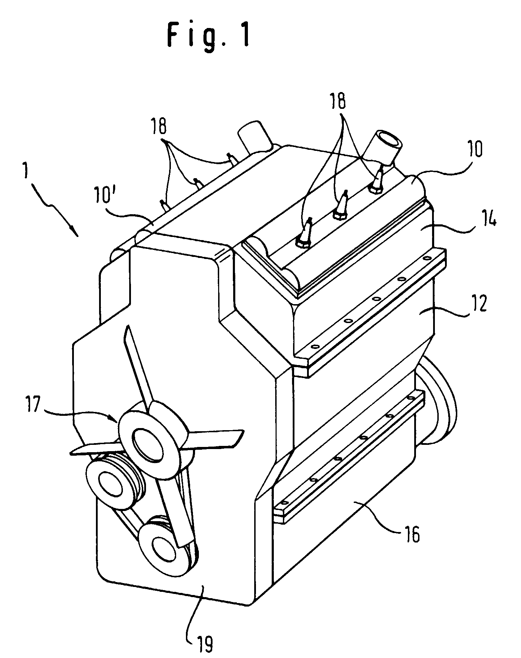

Fig. 1 zeigt eine Brennkraftmaschine 1. Bei der Brennkraftmaschine handelt es sich um einen V-6-Zylindermotor, wie anhand der beiden oben auf einem mit einem Motorblock 12 verbundenen Zylinderkopf 14 vorgesehenen Ventildeckel 10, 10' und den aus jedem Ventildeckel 10, 10' herausstehenden drei Zündkerzen 18 zu erkennen ist. In ihrem unteren, vom Zylinderkopf 14 abgewandt gelegenen Bereich ist die Brennkraftmaschine 1 mit einer Ölwanne 16 versehen. Der Zylinderkopf und die Ölwanne sind in an sich bekannter Weise mit dem Motorblock verschraubt. An ihrem vorderen, stirnseitigen Bereich ist die Brennkraftmaschine 1 mit einem Deckel 19 versehen, der eine Abdeckung für umlaufende Steuerungselemente der Brennkraftmaschine bildet. Vor dem Deckel 19 ist ein Ventilatorrad 17 mit zugehörigem Antrieb angeordnet.

Die Erfindung wird im vorliegenden Beispiel anhand des nachfolgend als Deckel bezeichneten Ventildeckels 10 beschrieben. Grundsätzlich ist die Erfindung aber auch auf andere Abdeckungen, wie beispielsweise die Ölwanne 16 oder den Deckel 19 anwendbar. Auch kann der Deckel gemäß der vorliegenden Erfindung nicht nur bei der Brennkraftmaschine, sondern auch bei einem Getriebe eines Kraftfahrzeugs eingesetzt werden. Darüber hinaus ist die Realisierung der Erfindung auch außerhalb des Bereichs der Kraftfahrzeugtechnik, beispielsweise im Flugzeugbau oder bei anderen Maschinenbau-Anwendungen möglich.

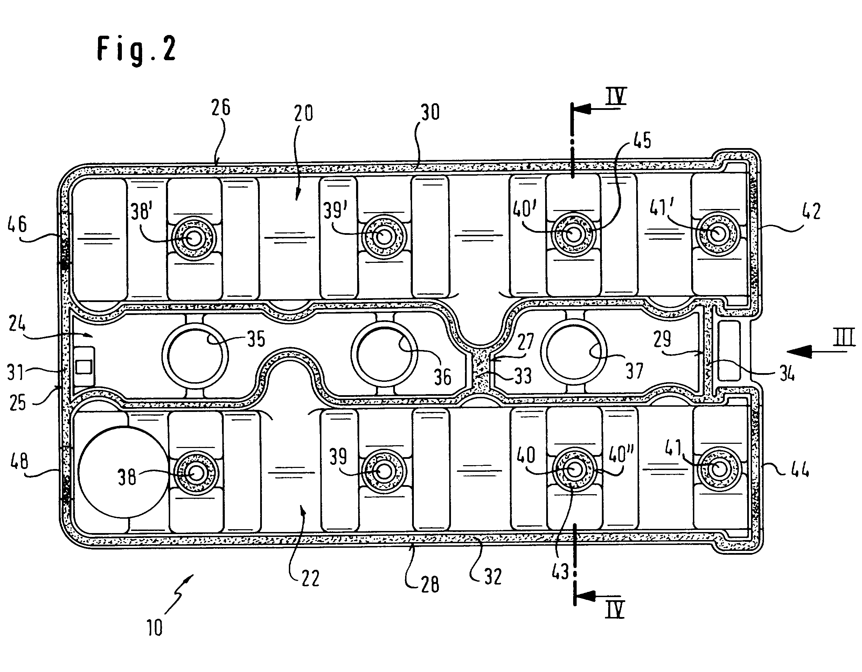

In Fig. 2 ist der Deckel 10 in einer Ansicht von unten bezüglich der Darstellung in Fig. 1 gezeigt, so daß die mit dem Zylinderkopf 14 zusammenzufügende Dichtungsseite des Deckels 10 sichtbar ist. Der Deckel 10 besteht aus zwei im wesentlichen ähnlich gestalteten Seitenbereichen 20, 22, die einen Mittelbereich 24 zwischen einander einschließen. Die Seitenbereiche 20, 22 und der Mittelbereich 24 verlaufen parallel zueinander in Längsrichtung des Deckels 10. Jeder Seitenbereich 20, 22 ist von einer Nut 26, 28 begrenzt, in welcher eine Dichtung 30, 32 gebildet ist.

Die Nut verläuft in jedem Seitenbereich 20, 22 entlang des Außenumfangs des Deckels 10; lediglich im Bereich der Abgrenzung der Seitenbereiche 20, 22 zum Mittelbereich 24 beschreibt der Nutenverlauf Kurven und Ausbuchtungen, die an den durch die Konstruktion des Zylinderkopfes 14 bestimmten Verlauf der auf dem Zylinderkopf 14 vorgesehenen Dichtfläche angepaßt sind. Die Nuten 26 und 28 sind miteinander durch Verbindungsnuten 25, 27 und 29 verbunden, die jeweils ebenfalls mit Dichtungsabschnitten 31, 33 und 34 versehen sind, welche einstückig in die Dichtungen 30 und 32 übergehen.

Der Deckel 10 besitzt im Mittelbereich 24 drei in Längsrichtung des Deckels hintereinander und mit Abstand voneinander angeordnete Öffnungen 35, 36, 37, welche zum Durchtritt jeweils einer Zündkerze 18 in den Zylinderkopf 14 ausgelegt sind.

In jedem Seitenbereich 20, 22 sind etwa in der Mitte eines jeden Seitenbereiches in Längsrichtung des Deckels 10 hintereinander und mit Abstand voneinander angeordnet jeweils vier Montagebohrungen 38, 39, 40, 41; 38', 39', 40', 41' ausgebildet, durch die hindurch eine Befestigung des Deckels 10 mittels Bolzen am Zylinderkopf oder an im Zylinderkopf vorgesehenen Lagerteilen einer Ventilsteuerung erfolgt. Jede dieser Bohrungen ist von einer zugehörigen Ringnut umgeben, wie am Beispiel der der Bohrung 40 zugeordneten Nut 40" gezeigt ist.

Der in Fig. 2 dargestellte Deckel weist somit zwei vollständig von einer Dichtung umgebene Seitenbereiche 20, 22 sowie einen dazwischengelegenen, ebenfalls gegenüber den Seitenbereichen 20, 22 und nach außen abgedichteten Mittelbereich 24 auf.

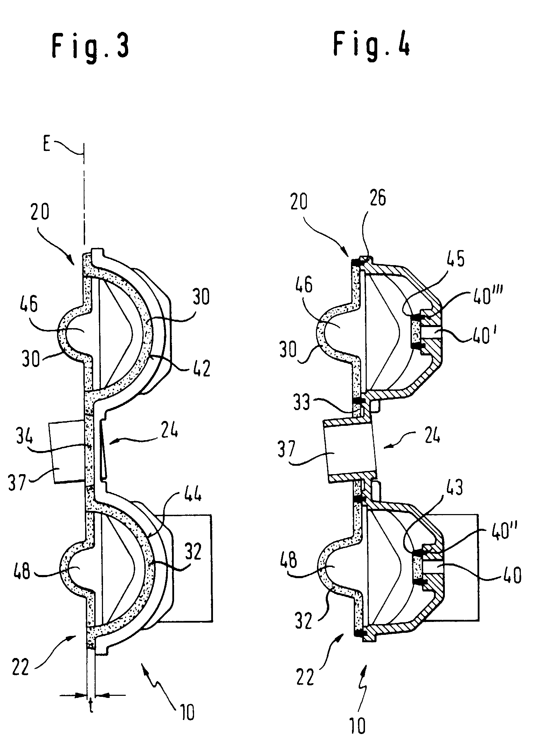

Aus der in Fig. 3 wiedergegebenen Seitenansicht in Richtung des Pfeiles III in Fig. 2 wird deutlich, wie die Dichtung 30, 32 über die Kontur des Deckels 10 um den Betrag t hervorsteht. Ebenfalls in Fig. 3 erkennbar ist die dreidimensionale Ausgestaltung der mit dem Deckel 10 verbundenen Dichtung. In einem ersten (in Fig. 2 rechten) Abschnitt des Deckels 10 besitzt dieser in jedem Seitenbereich 20, 22 eine im wesentlichen halbkreisförmige Ausnehmung 42, 44. Die Dichtung verläuft mit ihrem Dichtungsabschnitt 30 bzw. 32 aus der Hauptdichtungsebene E heraus entlang der Kontur des Deckels 10 im Bereich der jeweiligen Ausnehmung 42 bzw. 44. In ähnlicher Weise folgt die Dichtung 30, 32 der Kontur eines im wesentlichen halbkreisförmigen Vorsprungs 46 bzw. 48 am anderen (in Fig. 2 linken) Ende des Deckels 10.

Aus den Fig. 2 und 3 wird deutlich, daß die Dichtung beim Deckel 10 der Erfindung einen dreidimensionalen Verlauf nimmt und sich nicht nur, wie im Stand der Technik, in einer Ebene erstreckt.

Der in Fig. 4 gezeigte Querschnitt durch den Deckel 10 entlang der Linie IV-IV der Fig. 2 zeigt, daß auch in den die Bohrungen 40, 40' umgebenden Ringnuten 40'', 40"' jeweils eine Dichtung 43, 45 eingesetzt ist. Durch die Dichtungen 43, 45 wird der Innenraum des jeweiligen Abschnitts 22, 20 des Deckels 10 gegenüber der jeweiligen Befestigungsbohrung 40, 40' abgedichtet. Auf die gleiche Weise und zum selben Zweck sind auch die Bohrungen 38, 39, 41; 38', 39', 41' mit in jeweilige Ringnuten eingesetzten Dichtungen umgeben.

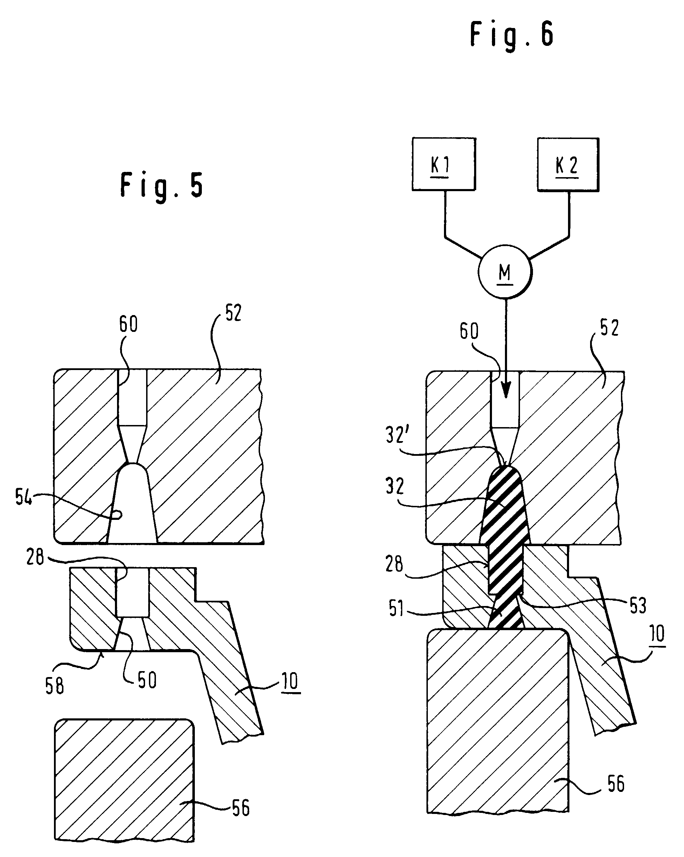

Das erfindungsgemäße Herstellungsverfahren der Dichtung im Deckel 10 wird anhand der Fig. 5 und 6 erläutert. Der Deckel 10, der in seinem Randbereich mit der Nut 28 versehen ist, besitzt über den Verlauf der Nut 28 verteilt eine Mehrzahl von am Nutgrund der Nut 28 in die Nut einmündenden Durchgangsöffnungen 50. Der Querschnitt einer jeweiligen Durchgangsöffnung 50 ist im Bereich der Mündung in die Nut kleiner als in dem von der Nut abgewandten Bereich, so daß die Durchgangsöffnung sich vom Nutgrund ausgehend konisch erweitert. Es kann auch eine Hinterschneidung 53 ausgeformt werden.

Bei der Herstellung der Dichtung 32 dient der Deckel 10 als ein erstes Werkzeug- oder Formteil, welches mit einem weiteren Werkzeug- oder Formteil 52 zusammen eine Form für die Ausbildung der Dichtung bildet. Das weitere Formteil 52 ist mit einer dem späteren Dichtungsverlauf angepaßten Formnut 54 versehen, welche im zusammengesetzten Zustand von Deckel 10 und weiterem Formteil 52 die im Deckel 10 vorhandene Nut 28 überdeckt. Ein Preßwerkzeug 56 kommt gegen eine Auflagefläche 58 an der vom weiteren Formteil 52 abgewandten Rückseite des Deckels zur Anlage (siehe Fig. 6) und preßt den Deckel 10 gegen das weitere Formteil 52.

Im weiteren Formteil 52 ist zumindest eine Einleitöffnung 60 vorgesehen, die in die Formnut 54 mündet und die Einleitung von Material zur Herstellung der Dichtung in die von der Formnut 54, von der Nut 28 und von den hinterschnittenen Durchgangsöffnungen 50 gebildeten Dichtungsform gestattet. Die Einleitöffnung 60 kann alternativ dazu auch im Deckelteil 10 oder im Preßwerkzeug 56 vorgesehen sein und in die Durchgangsöffnung 50 münden.

Während die Nut 28 im Deckel 10 mit im wesentlichen parallelen Seitenwänden versehen ist, ist die Formnut 54 im weiteren Formteil 52 keilförmig ausgebildet, wobei sich ihr Querschnitt vom Deckel 10 weg zum freien Ende hin verjüngt und am freien Ende eine abgerundete Kante aufweist, welche später die Dichtfläche bildet. Die Breite des Querschnitts der Formnut 54 im Bereich der Kontaktfläche des weiteren Formteils 52 mit dem Deckel 10 ist größer als die Breite der Mündung der im Deckel vorgesehenen Nut 28. Durch diese Überdeckung der Formnut 54 über die Nut 28 wird, wie in Fig. 6 zu erkennen ist, dafür gesorgt, daß die Breite des Dichtungsquerschnitts im Bereich unmittelbar außerhalb der Nut 28 größer ist als im Mündungsbereich der Nut 28, so daß die Dichtung auf dem die Nut 28 umgebenden Oberflächenbereich des Deckels 10 aufliegt. Außerdem ist eine Hinterschneidung 53 vorhanden.

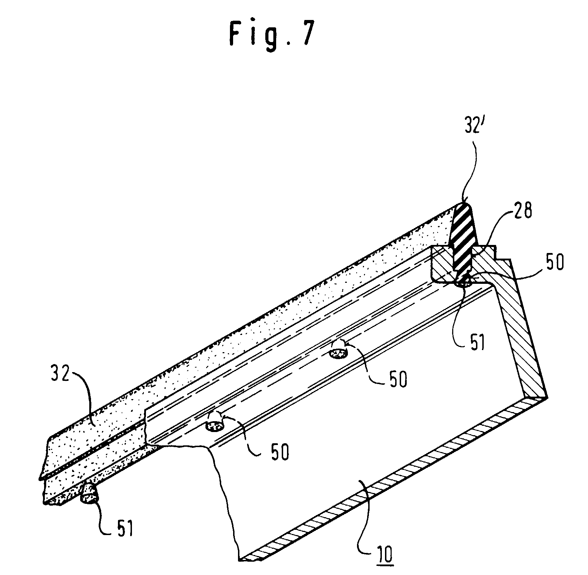

Die Verankerung der Dichtung 32 im Deckel 10 mittels der innerhalb der hinterschnittenen Durchgangsöffnungen 50 gebildeten Verankerungszapfen 51 der Dichtung 32 ist in Fig. 7 veranschaulicht. Die Verankerungszapfen 51 sind in jeweils einer der Vielzahl von hinterschnittenen Durchgangsöffnungen 50 gebildet, welche entlang des Verlaufs der im Deckel 10 vorgesehenen Nut 28 voneinander beabstandet ausgebildet sind.

Der Deckel 10 und das weitere Formteil 52 werden nach der Herstellung des Deckels 10 zusammengefügt, und das Preßwerkzeug 56 wird gegen die gegebenenfalls vorher bearbeitete Auflagefläche 58 des Deckels 10 angepreßt, um den Deckel 10 und das weitere Formteil im Bereich der zu erzeugenden Dichtung 32 fest zusammenzudrücken. Die Komponenten K1 und K2 des Dichtungsmaterials werden, wie in Fig. 6 schematisch dargestellt ist, in einer Mischeinrichtung M zusammengeführt und durch die Einleitöffnung 60 unter Druck in die Dichtungsform eingeleitet. Die Dichtungsform füllt sich dadurch vollständig mit dem Dichtungsmaterial.

Nach dem Erhärten des Dichtungsmaterials wird das weitere Formteil 52 vom Deckel 10 abgenommen. Durch die konische Ausgestaltung der Formnut 54 löst sich die Dichtung 32 unproblematisch aus der Formnut 54, während sie aufgrund der hinterschnittenen Durchgangsöffnung 50 und des darin entstandenen Verankerungszapfens 51 der Dichtung 32 im Deckel 10 fest verankert ist. Anstelle des Vorsehens der hinterschnittenen Durchgangsöffnung 50 oder auch zusätzlich dazu kann auf die Wandung der Nut 28 ein Material zur Haftungsverbesserung, beispielsweise ein Klebstoff, vor dem Einleiten des Dichtungsmaterials in die Dichtungsform aufgebracht werden.

Die keilförmige Ausbildung der Dichtung 32 in ihrem außerhalb des Deckels 10 gelegenen Bereich mit der abgerundeten Kante 32' an ihrem freien Ende sorgt in Verbindung mit einer geeigneten Elastizität der Dichtung 32 für ausgezeichnete Rückstelleigenschaften der Dichtung, wodurch sich die Dichtung 32, beispielsweise nach einer Demontage eines Ventildeckels vom Zylinderkopf 14, nach einiger Zeit erholt und wieder im wesentlichen ihre ursprüngliche Form einnimmt, so daß eine erneute Montage des Ventildeckels auf dem Zylinderkopf 14 mit derselben Dichtung vorgenommen werden kann.

Die im Zusammenhang mit den Fig. 5, 6 und 7 beschriebene Ausgestaltung und Herstellung der Dichtung 32 in der Nut 28 im Seitenbereich 22 des Deckels 10 gilt in gleicher Weise auch für die Dichtung 30 im Seitenbereich 20 des Deckels 10 und für die Dichtungsabschnitte 31, 33 und 34 , welche die Dichtungen 30 und 32 miteinander verbinden.

## Patentansprüche

1. Verfahren zur Herstellung eines Deckels (10) zum Befestigen auf einem Maschinengehäuse (12) mit einer in einer Nut (25 bis 29) angeformten Dichtung (30, 32) in einer Auflagefläche zum Maschinengehäuse (12), wobei der im Druckgußverfahren aus Leichtmetall hergestellte Deckel (10) mit seiner Längs seines Randes ringsherum verlaufenden Nut (25 - 29) als eine Werkzeughälfte zur Herstellung der Dichtung (30, 32) dient,
**dadurch gekennzeichnet,**
daß die Dichtung (30, 32) einen dreidimensionalen Verlauf nimmt und daß die Einleitung von Material zur Herstellung von der Dichtung (30, 32) in eine aus Deckel (10) und einem weiteren Formteil (52) gebildete Dichtungsform durch eine die Wandung des weiteren Formteils (52) durchdringende Einleitöffnung (60) oder durch zumindest eine die Wandung des Deckels (10) durchdringende, in die Nut (25 - 29) mündende und hinterschnitten ausgebildete Durchgangsöffnung (50) erfolgt, wobei der Deckel (10) und das weitere Formteil (52) während der Erzeugung der Dichtung unter Druck zusammengepreßt werden und die Dichtung (30, 32) nach dem Entfernen des weiteren Formteils (52) unverlierbar mit dem Deckel verbunden ist.

2. Verfahren nach Anspruch 1,
**dadurch gekennzeichnet,**
daß zusätzlich zur in einer Nut (25 - 29) verlaufenden Dichtung (30, 32) zugleich weitere Dichtungen (43, 45) um Öffnungen (38, 39, 40, 41) im Deckel (10) in gleicher Weise ausgebildet werden.

3. Verfahren nach Anspruch 1,
**dadurch gekennzeichnet,**
daß die Einleitung von Material zur Herstellung der Dichtung (30, 32) in der Nut (25 - 29) des Deckels (10) bis unter zumindest eine oder mehrere Hinterschneidungen (53) in der Nut (25 - 29) erfolgt.

4. Verfahren nach Ansprüchen 1 oder 3,
**dadurch gekennzeichnet,**
daß das Material zur Herstellung der Dichtung (30, 32) aus zumindest zwei Komponenten (K1, K2) gebildet wird.

5. Verfahren nach Anspruch 4,
**dadurch gekennzeichnet,**
daß die Komponenten (K1, K2) des Materials zur Herstellung der Dichtung (30, 32) erst beim oder unmittelbar vor dem Einleiten in die Dichtungsform zusammengeführt werden.

6. Deckel (10) aus Leichtmetall zum Befestigen auf einem Maschinengehäuse (12) mit einer in der Nut (25 - 29) angeformten, dreidimensional verlaufenden Dichtung (30, 32) in der Auflagefläche zum Maschinengehäuse (12) und hergestellt nach einem oder mehreren der vorausgehenden Ansprüche,
**dadurch gekennzeichnet,**
daß die Dichtung (30, 32) in der Nut (25 - 29) durch Hinterschneidungen (53) und/oder in keilförmig durch die Wandung des Deckels (10) stellenweise hindurchgehende Öffnungen (50) gesichert ist.

7. Deckel nach Anspruch 6,
**dadurch gekennzeichnet,**
daß der Querschnitt der Durchgangsöffnung (50) im Bereich der Mündung in der Nut (25 - 29) kleiner ist als in deren von der Nut (25 - 29) abgewandtem Bereich, so daß die Durchgangsöffnung (50) hinterschnitten ist, und daß die Kontur der Dichtung (30, 32) in ihrem in die Durchgangsöffnung (50) eingreifenden Bereich im wesentlichen der Kontur der Durchgangsöffnung (50) entspricht.

8. Deckel nach Anspruch 6,
**dadurch gekennzeichnet,**
daß die Dichtung (30, 32) in ihrem außerhalb des Deckels (10) gelegenen Bereich keilförmig ausgebildet ist, wobei sich ihr Querschnitt vom Deckel (10) weg zum freien Ende hin verjüngt.

9. Deckel nach Anspruch 8,
**dadurch gekennzeichnet,**
daß die Dichtung (32) an ihrem freien Ende mit einer abgerundeten Kante (32') versehen ist, welche die Dichtfläche bildet.

10. Deckel nach einem oder mehreren der Ansprüche 6 bis 9,
**dadurch gekennzeichnet,**
daß die Breite des Querschnitts der Dichtung (30, 32) im Bereich unmittelbar außerhalb der Nut (25 - 29) größer ist als im Mündungsbereich der Nut (25 - 29), so daß die Dichtung (30, 32) auf dem die Nut (25 - 29) umgebenden Oberflächenbereich des Deckels (10) aufliegt.

11. Deckel nach einem oder mehreren der Ansprüche 6 bis 9,
**dadurch gekennzeichnet,**
daß der Deckel (10) an seiner von der Mündung der Nut (25 - 29) abgewandten Seite mit einer im wesentlichen planen Auflagefläche (58) für ein Anpreßwerkzeug (56) versehen ist, welche dem ringförmigen Verlauf der Nut (25 - 29) folgt.

12. Deckel nach einem oder mehreren der Ansprüche 6 bis 10,
**dadurch gekennzeichnet,**
daß der Deckel (10) ein Ventildeckel einer Brennkraftmaschine (1) ist.

13. Deckel nach einem oder mehreren der Ansprüche 6 bis 10,
**dadurch gekennzeichnet,**
daß der Deckel (10) eine Ölwanne (16) einer Brennkraftmaschine (1) bildet.

14. Deckel nach einem oder mehreren der Ansprüche 6 bis 10,
**dadurch gekennzeichnet,**
daß der Deckel (10) eine Abdeckung (19) für umlaufende Steuerungselemente einer Brennkraftmaschine (1) bildet.

15. Deckel nach einem oder mehreren der Ansprüche 6 bis 10,
**dadurch gekennzeichnet,**
daß der Deckel (10) Teil eines Getriebes für ein Kraftfahrzeug ist.

16. Verfahren zum Herstellen einer Ersatzdichtung für eine unbrauchbar gewordene Dichtung, die gemäß den Ansprüchen 1 oder 3 hergestellt wurde, **dadurch gekennzeichnet,**
daß analog dem Herstellungsverfahren gemäß Ansprüchen 1 oder 3, eine in aus den zwei Werkzeugeteilen gebildeten Form hergestellte Ersatzdichtung einen Querschnitt aufweist, der im Vergleich zur ursprünglichen Dichtung außerhalb des Deckels (10) geometrisch gleich und innerhalb des Deckels (10) in der Weise geometrisch ähnlich ist, daß er schmaler und weniger tiefgehend hergestellt wird.

## Claims

1. A process for producing a cover (10) to be mounted on a machine housing (12), having a seal (30, 32) provided in a groove (25 to 29) in one bearing surface for the machine housing (12), wherein said cover (10), which is produced from light metal in a diecasting process and has its groove (25 - 29) extending all the way along its edge, serves as one mould half for producing said seal (30, 32)
**characterized in**
that said seal (30, 32) is three-dimensional in its course, and that the material for producing said seal (30, 32) is introduced into a seal mould formed by said cover (10) and a further mould half (52) via a feed aperture (60) penetrating the wall of said further mould half (52) or via at least one through passage (50) which penetrates the wall of said cover (10), leads into said groove (25 - 29) and is undercut, with said cover (10) and said further mould half (52) being forced together under pressure during the production of said seal, and said seal (30, 32) being attached to said cover when said further mould half (52) is removed in a way that it cannot be lost.

2. The process as claimed in claim 1
**characterized in**
that, in addition to the seal (30, 32) extending in a groove (25 - 29), further seals (43, 45) are simultaneously formed around apertures (38, 39, 40, 41) in said cover (10).

3. The process as claimed in claim 1
**characterized in**
that the material for producing said seal (30, 32) in said groove (25 - 29) of said cover (10) is filled in up to under at least one or plural undercut section(s) (53) in said groove (25 - 29).

4. The process as claimed in claims 1 or 3
**characterized in**
that the material for producing said seal (30, 32) comprises at least two components (K1, K2).

5. The process as claimed in claim 4
**characterized in**
that said components (K1, K2) of said material for producing said seal (30, 32) are only brought together during or immediately prior to their introduction into the seal mould.

6. A light metal cover (10) to be mounted on a machine housing (12) having a three-dimensionally extending seal (30, 32) provided in said groove (25 - 29) in the bearing surface for the machine housing (12) and produced as claimed in one or plural of the preceding claims
**characterized in**
that said seal (30, 32) is secured in said groove (25 - 29) by undercut sections (53) and/or in apertures (50) which in places penetrate the wall of said cover (10) in wedge-shape.

7. The cover as claimed in claim 6
**characterized in**
that the cross-section of the through passage (50) is smaller in the area where it leads into the groove (25 - 29) than in the area where it faces away from said groove (25 - 29), thus making the through passage (50) undercut, and that the contour of said seal (30, 32) in the area where it reaches into said through passage (50) essentially corresponds to the contour of said through passage (50).

8. The cover as claimed in claim 6
**characterized in**
that the portion of said seal (30, 32) which extends outside said cover (10) is wedge-shaped, with its cross-section tapering from said cover (10) to its free end.

9. The cover as claimed in claim 8
**characterized in**
that the free end of said cover (32) has a rounded-off edge (32') which forms the sealing surface.

10. The cover as claimed in one or plural of claims 6 to 9
**characterized in**
that said seal (30, 32) is wider in cross-section at the area extending immediately outside said groove (25 - 29) than at the termination area of said groove (25 - 29), so that said seal (30, 32) rests on the surface area of the cover (10) which surrounds said groove (25 - 29).

11. The cover as claimed in one or plural of claims 6 to 9
**characterized in**
that the side of said cover (10) which faces away from the termination of said groove (25 - 29) comprises a substantially planar bearing surface (58) for a pressing tool (56) which follows the annular course of said groove (25 - 29).

12. The cover as claimed in one or plural of claims 6 to 10
**characterized in**
that said cover (10) is a valve cover of an internal combustion engine (1).

13. The cover as claimed in one or plural of claims 6 to 10
**characterized in**
that said cover (10) is an oil sink (16) of an internal combustion engine (1).

14. The cover as claimed in one or plural of claims 6 to 10
**characterized in**
that said cover (10) is a cover (19) for rotating control elements of an internal combustion engine (1).

15. The cover as claimed in one or plural of claims 6 to 10
**characterized in**
that said cover (10) is part of a motorvehicle transmission.

16. A process for producing a replacement seal for a damaged or defective seal which was produced as claimed in claims 1 or 3
**characterized in**
that, analogous to the production process as claimed in claims 1 or 3, a replacement seal produced in the mould formed by the two tool halves is of a cross-section which, outside said cover (10), is geometrically identical to, and, inside said cover (10), is geometrically similar to that of the original seal in that it is produced to be narrower and less deep.

## Revendications

1. Procédé de fabrication d'un couvercle (10) à fixer sur un bâti de machine (12) comportant un joint (30, 32) moulé dans une rainure (25 à 29) dans une surface d'appui du bâti de machine (12), ledit couvercle (10), étant fabriqué en métal léger selon une technique de coulage sous pression, au moyen de sa rainure (25 - 29) longeant son bord tout autour, fait fonction d'une moitié de l'outil pour la fabrication du joint (30, 32),
caractérisé en ce que
ledit joint (30, 32) s'étend de manière tridimensionnelle, et que l'introduction de matériau pour la fabrication du joint (30, 32) dans un moule de joint composé du couvercle (10) et d'un second moule (52), s'effectue à travers un orifice d'introduction (60) traversant la paroi du second moule (52) ou au moins un passage (50) ménagé de manière contre-dépouillée traversant la paroi du couvercle (10) et débouchant dans la rainure (25 - 29), le couvercle (10) et le second moule (52) étant pressés l'un contre l'autre sous pression lors de la fabrication du joint, et ledit joint (30, 32) étant imperdablement lié avec le couvercle après le démontage du second moule (52).

2. Procédé selon la revendication 1,
caractérisé en ce que
en plus d'un joint (30, 32) s'étendant dans une rainure (25 à 29), d'autres joints (43, 45) sont en même temps aménagés de la même manière autour d'orifices (38, 39, 40, 41) présents dans le couvercle (10).

3. Procédé selon la revendication 1,
caractérisé en ce que
l'introduction de matériau pour la fabrication du joint (30, 32) dans la rainure ( 25 à 29) du couvercle (10) s'effectue jusqu'à atteindre au moins un ou plusieurs contre-dépouillements (53) dans la rainure (25 à 29).

4. Procédé selon les revendications 1 ou 3,
caractérisé en ce que
le matériau pour la fabrication du joint (30, 32) est constitué d'au moins deux composants (K1, K2).

5. Procédé selon la revendication 4,
caractérisé en ce que
les composants (K1, K2) pour la fabrication du joint (30, 32) ne sont réunis qu'au moment ou immédiatement avant leur introduction dans le moule du joint.

6. Couvercle (10) en métal léger à fixer sur un bâti de machine (12) comportant un joint (30, 32) au parcours tridimensionnel, moulé dans la rainure (25 à 29) dans la surface d'appui du bâti de machine (12) et fabriqué selon une ou plusieurs des revendications précédentes,
caractérisé en ce que
ledit joint (30, 32) est bloqué dans la rainure (25 à 29) au moyen de contre-dépouillements (53) et/ou dans des orifices de passage (50) traversant en coin par endroits la paroi du couvercle (10).

7. Couvercle selon la revendication 6,
caractérisé en ce que
la section transversale de l'orifice de passage (50) est plus petite dans la zone d'arrivée dans la rainure (25 à 29) que dans la zone opposée à la rainure (25 à 29), si bien que l'orifice de passage (50) est contre-dépouillé, et que le contour du joint (30, 32), dans la zone pénétrant dans l'orifice de passage (50), correspond essentiellement au contour de l'orifice de passage (50).

8. Couvercle selon la revendication 6,
caractérisé en ce que
le joint (30, 32), dans sa zone située à l'extérieur du couvercle (10), est cunéiforme, sa section transversale se réduisant vers son extrémité libre en s'éloignant du couvercle (10).

9. Couvercle selon la revendication 8,
caractérisé en ce que
le joint (32), à son extrémité libre, est pourvu d'un chant arrondi (32') qui constitue la surface d'étanchéité.

10. Couvercle selon l'une des revendications 6 à 9,
caractérisé en ce que
la largeur de la section transversale du joint (30, 32) est plus grande dans la zone immédiatement extérieure à la rainure (25 à 29) que dans la zone d'embouchure de la rainure (25 à 19), si bien que le joint (30, 32) repose contre la zone de la surface du couvercle (10) qui entoure la rainure (25 à 29).

11. Couvercle selon une ou plusieurs des revendications 6 à 9
caractérisé en ce que
sur son côté opposé à l'embouchure de la rainure (25 à 29), le couvercle (10) est pourvu, d'une surface d'appui (58) essentiellement plane qui suit le parcours circulaire de la rainure (25 à 29) pour recevoir un outil de pression (56).

12. Couvercle selon une ou plusieurs des revendications 6 à 10
caractérisé en ce que
le couvercle (10) est un couvercle de soupape d'un moteur à combustion interne (1).

13. Couvercle selon une ou plusieurs des revendications 6 à 10
caractérisé en ce que
le couvercle (10) constitue un réservoir d'huile (16) d'un moteur à combustion interne.

14. Couvercle selon une ou plusieurs des revendications 6 à 10
caractérisé en ce que
le couvercle (10) constitue un recouvrement pour des éléments de commande tournants d'un moteur à combustion interne (1).

15. Couvercle selon une ou plusieurs des revendications 6 à 10
caractérisé en ce que
le couvercle (10) fait partie d'une boîte de vitesses d'un véhicule à moteur.

16. Procédé de fabrication d'un joint de remplacement pour un joint devenu inutilisable qui avait été fabriqué selon les revendications 1 ou 3,
caractérisé en ce que
par analogie avec le procédé de fabrication selon les revendications 1 ou 3, un joint de remplacement fabriqué à partir de deux coquilles d'un moule présente une section transversale, qui, par comparaison avec le joint original, est géométriquement égale en dehors du couvercle (10), et qui, à l'intérieur du couvercle (10) est géométriquement similaire de telle sorte qu'elle est plus étroite et moins profonde.
